# EUROPEAN PATENT APPLICATION

(11) **EP 1 826 732 A2**
(43) Date of publication of application: **29.08.2007**
(21) Application number: 07250811.2
(22) Date of filing: 27.02.2007
(51) Int. Cl.: G08B 13/16, B60R 25/10

(54) **Intruder alarm**

(30) Priority: 28.02.2006 GB 0604032
(71) Applicant: E2V Technologies (UK) Limited, Chelmsford, Essex CM1 2QU (GB)
(72) Inventor: Hobden, Mervyn K., Lincoln LN1 1SF (GB); Hilder, Graham, Lincoln LN1 1SF (GB); Bradbury, Matthew, Lincoln LN1 1SF (GB); Hobden, Peter, Lincoln LN1 1SF (GB)
(74) Representative: Want, Clifford James

(57) **Abstract**

An intruder alarm, for example, a vehicle intruder alarm, uses a microwave transceiver having an antenna arrangement 1 to detect movements into the space to be monitored. Unlike existing intruder alarms of this type, the antenna arrangement 9, 10 transmits beams in the space corresponding to different spatial volumes, and the circuit architecture provides for a pair of channels 4 to process data corresponding to the different beams. A processor 3 initiates operation of the alarm using the output of both the channels.

## Description

This invention relates to intruder alarms for monitoring a space.

Typical of such alarms are intruder alarms for monitoring a vehicle interior.

Known vehicle intruder alarms detect intrusion, such as an arm moving into the vehicle through a window, using ultrasonic or r.f. electromagnetic waves. Typical of the latter are microwave transceivers designed to detect moving objects in the immediate vicinity of or inside a vehicle. In order to achieve this reliably, amplitude threshold detection may be used, to provide positive discrimination on the basis of size and range of target. The system is only sensitive to moving targets, and the range of Doppler frequencies to which the alarm can respond is limited, so that only slowly moving targets are sensed. Unfortunately, slowly moving large area targets such as garage doors produce large returns at a longer range with low Doppler shifts, and it has proved difficult reliably to reject such signals.

In an attempt to circumvent this restriction, some alarm manufacturers have used a form of range gating, but such means require either considerable bandwidth shift in the frequency domain, or very high processing bandwidths in order to capture very short events in the time domain. In one proposal, the transmitted signal is a combination of two different frequencies (EP-A-1 039 313), the characteristics of which are compared in the reflected signal.

The invention provides an intruder alarm for monitoring a space, comprising a transmitter and an antenna arrangement for radiating a plurality of beams corresponding to different spatial views into the space, and a receiver which includes first and second signal processing channels for concurrently processing reflected energy received by the antenna arrangement corresponding to different radiated beams, the alarm being responsive to the outputs of both channels.

The simultaneous processing of beams corresponding to different spatial volumes facilitates rejection of false alarms from objects external to the space being monitored.

The receiver may include further processing channels to enable further concurrent comparisons to be made to assist in the rejection of false alarms. The comparisons may include comparisons made between the reflected energy corresponding to one spatial view at different gains. Different pairs of beams may be compared in turn during the analysis in order to identify whether a potential threat is likely to be real or not. The comparisons may include comparisons with reference patterns, on an amplitude, phase or a time-varying basis, representative of known threat situations. Such reference patterns may be stored as a look-up table.

The antenna arrangement may include a phase shifter which is switchable to generate beams corresponding to the different spatial views. The antenna arrangement may comprise a pair of patch antennas, or a pair of alternately driven patches arranged on either side of a reflector patch, and may include switchable radiators, directors or reflectors. The antenna arrangement may include any of the antenna structures disclosed and claimed in our co-pending UK patent application no. 0700642.2.

The receiver may include a balanced mixer, preferably a balanced transistor mixer.

The space to be monitored may be a vehicle interior, or the exterior of a vehicle, such as the space surrounding a railway carriage, in order to detect movement in the vicinity of the carriage, for the purpose, for example, of detecting the presence of vandals. Alternatively, for non-vehicular applications, the space to be monitored may be empty property, or regions also monitored visually for security.

The transmitter may operate at any electromagnetic frequency, especially any microwave frequency, for example, between 2 GHz and 300 GHz: in a preferred form, the frequency of operation lies between 2 and 10 GHz.

Ways of carrying out the invention will now be described in greater detail, by way of example, with reference to the accompanying drawings, in which:
Figure 1 is a diagram of the architecture of an intruder alarm according to the invention;
Figure 2 is a timing diagram for operation of various circuit elements shown in Figure 1;
Figure 3 is a diagram of one particular implementation of the antenna arrangement shown in Figure 1;
Figure 4 shows the beams which can be produced by the antenna arrangement of Figure 3;
Figure 5 shows two beams which can be produced by the antenna arrangement of Figure 3 in a vehicle;
Figure 6 shows a single beam which can be produced by the antenna arrangement of Figure 3 in a vehicle;
Figure 7 is a diagram of an alternative form of antenna arrangement to that shown in Figure 3;
Figure 8 shows beams which can be produced by the antenna arrangement of Figure 7;
Figure 9 shows four beams which can be produced by the antenna arrangement of Figure 7 in a vehicle; and
Figure 10 shows a pair of beams which can be produced by the antenna arrangement of Figure 7 in a vehicle.

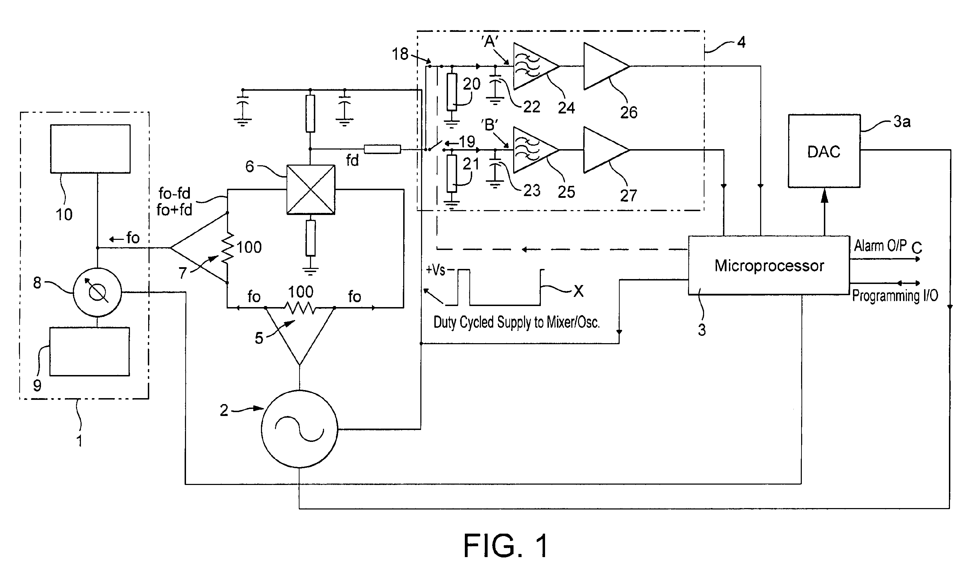

Referring to Figure 1, the intruder alarm is a vehicle intruder alarm, and is a microwave transceiver. An antenna arrangement 1 is driven with pulsed CW (continuous wave) r.f. energy from an oscillator 2 of the transmitter according to a duty cycle waveform X generated by a microprocessor 3 and via a digital-to-analogue converter 3 a.

The antenna arrangement is orientated to radiate various beams into the interior of the vehicle in which the intruder alarm is provided. Accordingly, successive pulses of microwave radiation illuminate the vehicle interior.

Reflected energy from the fixed structure of the vehicle, and Doppler returns from any moving objects are received at the antenna arrangement 1. The receiver feeds the Doppler signals to terminals A,B, forming the input to analogue signal processing means 4, the output of which is in turn connected to the microprocessor 3, having an alarm initiating output terminal C.

The output power of the oscillator 2 having output frequency fₒ is split, by means of a hybrid coupler indicated generally by the reference numeral 5, between the antenna arrangement 1 and a balanced mixer 6. A hybrid coupler 7 provides diplexing of the antenna arrangement port, allowing transmission of the RF drive to the antenna arrangement 1, while isolating the RF port of the mixer 6 from direct coupling to that power. The oscillator CW pulses are radiated by the antenna arrangement, and the reflected energy collected by it. This reflected energy, of frequency fₒ (from the vehicle interior), and of frequency fₒ ± f_{d} (Doppler returns from moving objects) is split equally in power as a result of the use of the hybrid coupler 7, so that half the power passes to the balanced mixer 6. The output of the mixer 6, during the duration of each pulse, comprises pulses whose serial amplitude with time forms the Doppler frequency f_{d}, and these are fed to terminals A,B.

In accordance with the invention, the analogue signal processing means 4 of the receiver part of the transceiver consists of more than one, in this case, two, signal processing channels, which process energy reflected from the different spatial beams radiated from the antenna arrangement driven by the oscillator 2.

The different beams correspond to different spatial views (volumes), and can be obtained by operating electronic phase shifter 8 arranged between the antenna arrangement feed and two patches 9, 10, which form the antenna arrangement 1. The electronic phase shifter 8 is controlled by the microprocessor 3.

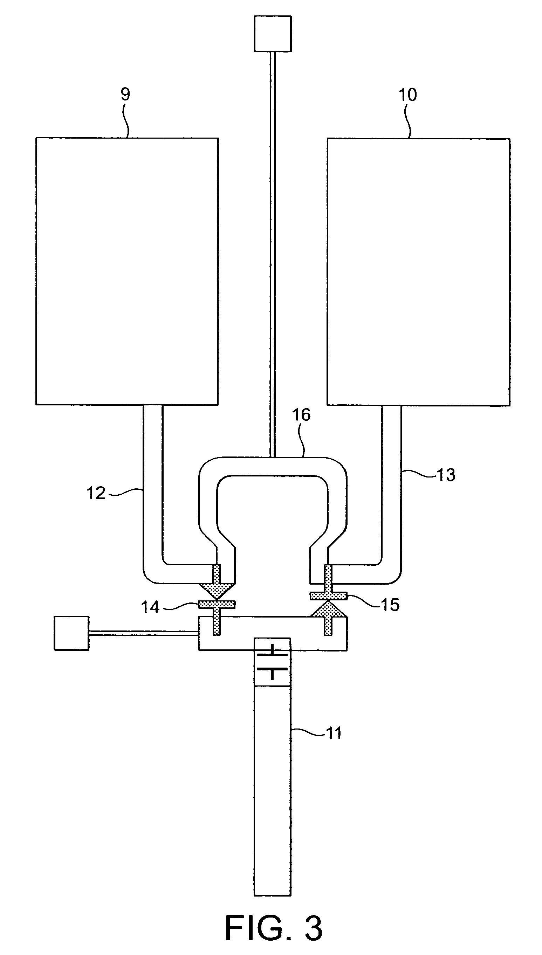

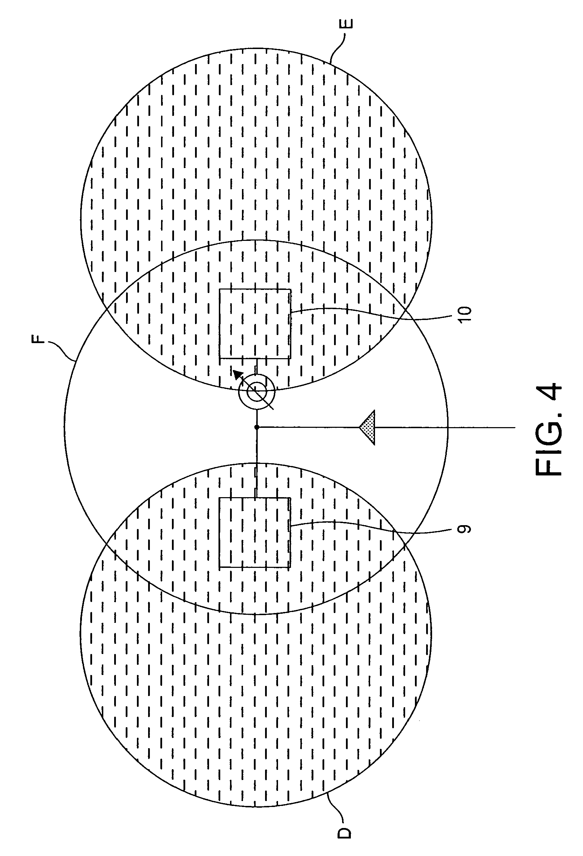

Referring to Figure 3, in one possible implementation the two patches 9, 10 are arranged side-by-side and are fed from the output of the hybrid coupler 7 via a strip 11. The strip 11 connects to strips 12, 13 under the control of electronic phase shifter 8 which is implemented by PIN switching diodes 14, 15. An additional loop of strip 16 is provided. With one setting of the diodes, strip 11 connects directly to strip 12, but indirectly via the loop 16 to strip 13, with the result that the patches 9, 10 are driven in phase quadrature such that the beam D (Figure 4) is directed to the left of the patches. With another setting of the diodes, strip 11 connects directly to strip 13, and via the loop 16 to strip 12, so that the patches 9, 10 are now driven in phase quadrature such that the beam E (Figure 4) is directed to the right of the patches. With a third setting of the diodes, the strip 11 feeds the strips 12, 13 directly, so that the patches 9, 10 are driven in phase with each other, producing central beam F (Figure 4).

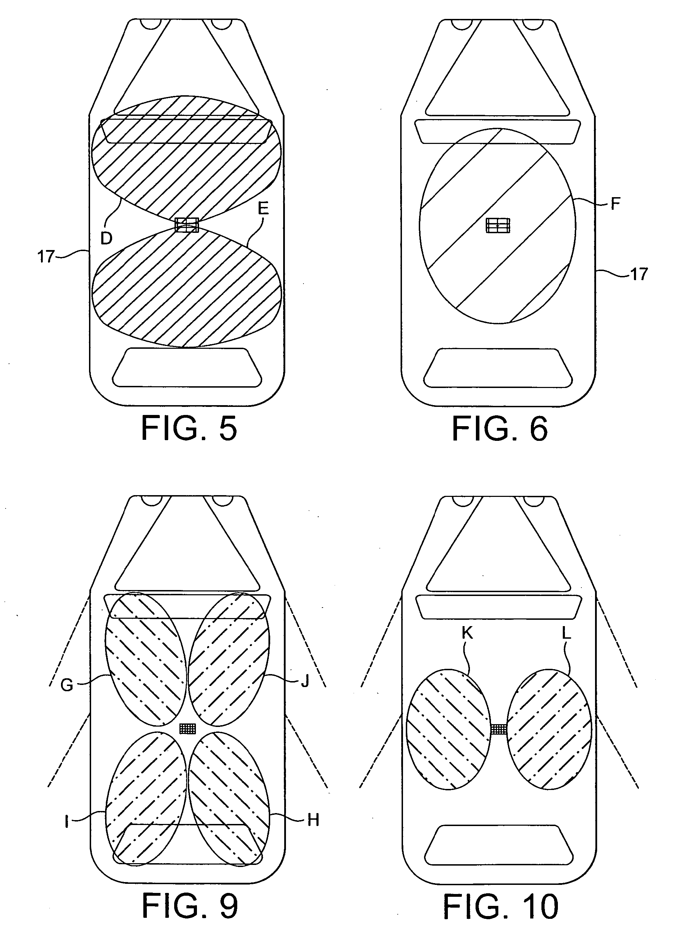

One possible orientation of mounting the antenna arrangement in a vehicle 17 is shown in Figures 5 and 6. The PIN diodes 14, 15 can be switched to produce either the forwardly-directed lobe pattern D or the rearwardly-directed lobe pattern E, or the central lobe pattern F.

Referring now to the analogue signal processing means 4, the inputs are switched by electronic switches 18, 19 under the control of microprocessor 3 in synchronism with the electronic phase shifter, also controlled by the microprocessor 3. The alarm is duty cycled (waveform X) to reduce total current consumption and to provide flexible processing. Both the oscillator and the mixer are capable of rapid switching from an off to an on state, with minimum transients in both amplitude and frequency. Settling times are typically less than 5µs. The input to the amplifier chains is via sample/hold circuits 20,21 so as to control the gain reduction due to integration over the duty cycle period.

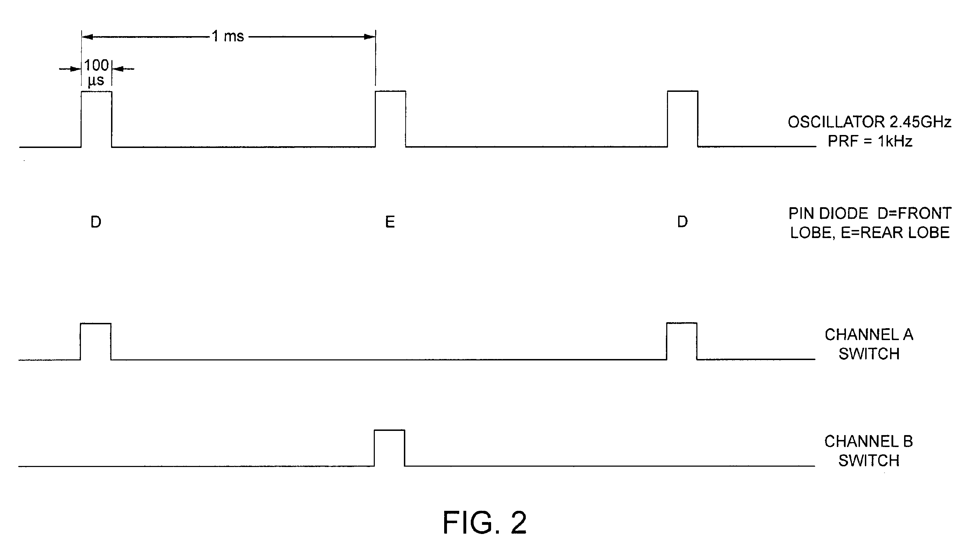

In one mode of operation (Figure 2), the microprocessor controls the electronic phase shifter so that alternate transmitted (and therefore received) pulses correspond to the forward beam D and the rearward beam E, respectively, and the electronic switches 18, 19 are controlled in synchronism so that the pulses of reflected energy corresponding to the forward beam D pass through switch 18 (terminal A) and the pulses of reflected energy corresponding to the rearward beam E pass through switch 19 (terminal B). The microprocessor is used to compare the amplitudes of the signal in the two channels.

If it is found that the amplitude is greater in one channel than the other, then it can be assumed that the threat stems from the corresponding end of the vehicle. The PIN diodes are then switched so that central beam F is transmitted and the reflected energy received on one channel, in alternation with the beam associated with the threat on the other channel. If it is found that the amplitude of the signals in the channels is the same (within predetermined limits), then this indicates that the threat stems from an intrusion into the vehicle from the end indicated. If, on the other hand, it is found that the amplitude on the channel indicating a threat at one end of the vehicle is greater than the amplitude on the channel corresponding to the central beam, then this indicates that the threat is caused by something external to the vehicle.

Equally, if it is found, on a comparison of the amplitudes between the channels fed by switches 18, 19 when one represents the forward beam and one the rear, that the amplitudes are approximately the same, then a comparison can again be made between the signal in either one of these channels, and the signal corresponding to beam F in Figure 6, by transmitting such a pattern on alternate pulses. If the amplitude corresponding to beam F is significantly lower, then this indicates that the threat relates to an interfering signal. This can be confirmed by performing a cross-correlation operation on the signals, to confirm that they arise from a single source.

A signal, coming from one particular end of the vehicle and increasing in amplitude with time is most likely to be originated by a single moving object. A signal seen at both ends, and of a fairly constant amplitude with time is most likely to have originated from an interfering source. Hence, the time-varying nature of the beams being passed down the processing channels may be also monitored.

In this first mode of operation, two signals representing front and rear spatial views will be similar in amplitude close to the sensor, but the amplitude of the signal from the beam pointing towards the threat will become increasingly dominant as the distance increases from the sensor. Thus, the ratio of the two amplitudes, and their relative rate of change, is a measure of the relative distance of the threat from the sensor. By using these amplitude ratios, zones can be established in the vehicle corresponding to particular distances from the sensor. Additional signal processing can then be concentrated on signals known to emanate from particular, threatened, zones or, where the ratio corresponds to a distance from the sensor outside the vehicle, the signal can be ignored.

In this first mode of operation, the different beams correspond to different spatial views. A second mode of operation may be used in conjunction with the first mode, in which the different beams correspond to the same spatial view, but this time at different gains.

As an example, the PIN diodes could remain in the state in which front beam D is generated, but the channel switches 18, 19 could be synchronised with beams of different gain. This may be done in various ways. First, the pulse width transmitted may be alternated between longer and shorter pulses, and they may be split between the amplifier chains fed by switches 18,19 on that basis. Alternatively, the pulse width may be left unchanged, and the gain in the channels may be made different by operating the sample-and-hold 20, 21 at a faster rate in one channel than the other, or with a lower threshold in one channel than the other.

Objects within the shell of the vehicle tend to change amplitude on a 1/R to 1/R² law where R is the distance from the antenna arrangement, dependent on the total field perturbed by the moving object. External objects tend to fall off on a 1/R⁴ law, as in the case of a free space radar, in the case of small objects, tending towards a 1/R² to 1/R⁴ law for larger objects such as a moving truck or other large vehicle.

By now comparing the rate of change of signals in the channels, one at a reduced gain compared to the other, it is possible to gauge what law the gain is falling off at, and hence whether the moving object which is being assessed is within or outside the vehicle.

The time-varying nature of the signals may be compared by taking the derivative of the signal on each channel, and comparing the derivatives.

In another mode of operation, the signal in each of the channels (either amplitude or variation in time) is compared with stored reference patterns, or the derivatives of the signals are compared with stored reference patterns. Such reference patterns may be stored in look-up tables, or as other forms of distributed memory.

The derivative of amplitude change for when an object is moving into the volume of the vehicle is found to be to totally different to that caused by an external object such as a closing garage door or a parking vehicle.

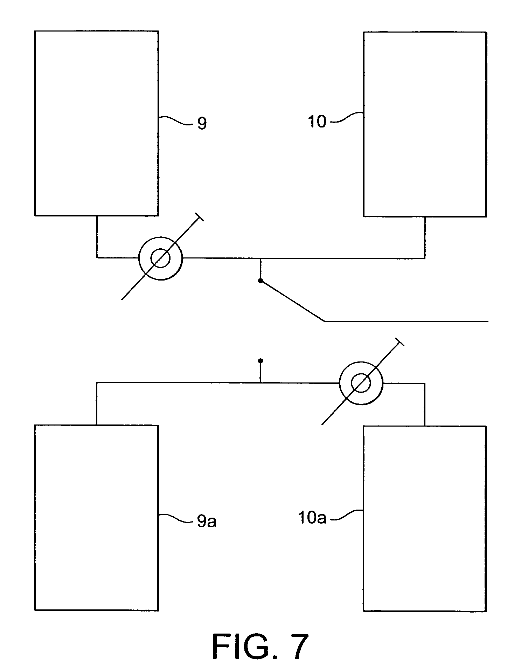

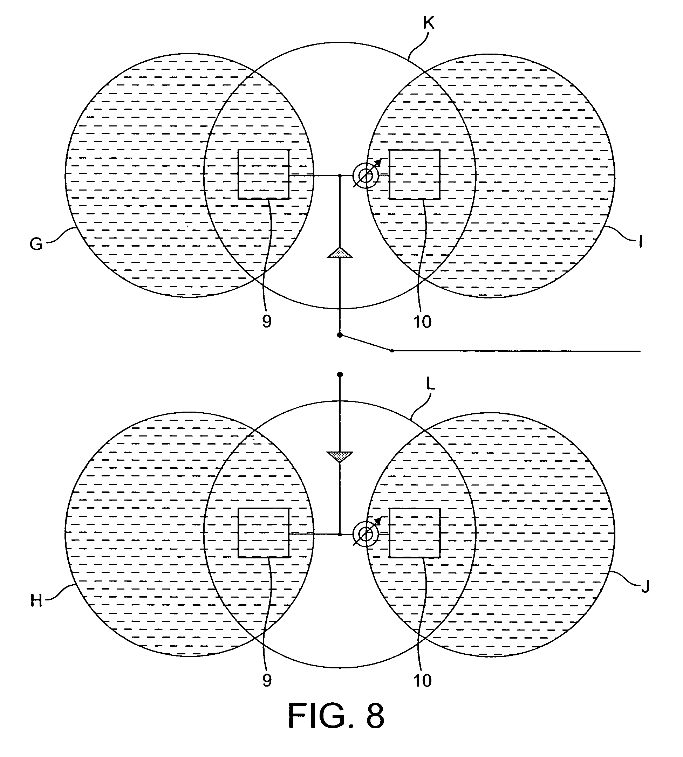

Referring to Figures 7 and 8, an alternate form of antenna arrangement may be used in the architecture of Figure 1. This consists of a pair of the antenna arrangements shown in Figure 3, shown as 9, 10, 9a, 10a. This time, beams corresponding to six spatial views (G-L) can be generated. (Figure 8),

The antenna arrangement may be arranged in the vehicle so that four beams G-J extend as shown in Figure 9. Only one of the beams is generated at one time. Any two of the four beams may be compared with each other in the two processing channels, or with central beams produced when the signals from respective pairs of antennas are summed in phase at the same relative gain. Equally, any of the views may be compared with itself at different gain levels, and the signals in the channels may be compared with reference signals, or the derivates thereof.

Following the sample/hold circuitry 20,21 at the input of each channel a bandwidth limited amplifier chain may be provided to raise the signals from the Doppler returns to the level where they provide the full dynamic range required by an analogue to digital converter of the microprocessor 3. To provide amplitude discrimination of the signal in a channel and therefore the spatial discrimination of the intruder alarm, the analogue to digital converter may be followed by multiple software based threshold detectors, with weighted responses in both the amplitude or time domains as required by the response pattern selected by the sensor software. These may be used in parallel, to provide relative amplitude discrimination or in series, to provide classification of signals, or in any combination of series/parallel as required to give correct identification of the incoming signal. As the relative level of any given threshold with respect to zero volts is a measure of the relative gain for that threshold, the primary method of setting sensitivity my be by the use of the appropriate threshold or thresholds.

As the RF circuitry and the analogue gain stages are designed specifically for rapid duty cycling, and to be tolerant to changes in duty cycle on demand, the operation of the alarm may be made very flexible. It is no longer necessary for the alarm to be operational 100% of the time if selective attention is used to focus operation, both in the time domain and spatially. The sample and hold receiver means that there is no dramatic shift in effective gain with reduced duty cycle, and the duty cycle ratio can be varied within wide limits. Concurrent processing is always active, even on reduced duty cycle, so as to allow the recognition of a threat-derived signal. Once a signal pattern has been selected, the alarm can power up to a much faster rate of analysis, to determine if the threat is real, sustained and a valid alarm. If the correct criteria are not met, no action is taken, and the alarm returns to its monitoring state at low current consumption.

Variations may of course be made without departing from the scope of the invention. For example, the pulse rate of the microprocessor may be varied, as can the pulse width. A terminal may be provided as a programming input/output.

The mixer may operate on the autodyne principle. Such a mixer has the property of rejecting signals not coherent with the source feeding both the antenna arrangement and the local oscillator drive to the mixer. In particular, it has the property to reject amplitude- modulated signals on its signal port derived from a carrier source not frequency coherent with its own local oscillator, and not spatially coherent with signals returned within the coherence time of the Doppler head. Rejection is of the order of 15 - 20dB, which makes a useful contribution to the alarm's ability to reject incoherent interfering sources such as microwave ovens.

The transceiver may be arranged so that, in the monitoring mode, the alarm looks at low level signals using variable gain in the microprocessor channels connected to the two analogue channels. The two analogue channels are used with the antenna arrangement modes to provide spatial resolution, dependent on the number of antenna arrangement modes used. The advantage of the oscillator/balanced mixer autodyne with its high inherent rejection of AM modulated signals, unless they are spatially coherent is that changing signal amplitude can be more easily correlated to changing range of a target. With a single-ended mixer, or a self-oscillating mixer, such a correlation is very difficult, as it has equal sensitivity to the changing phase and magnitude of the return signal, or of any interfering signal. In a situation where two or more channels of information are to be cross-correlated, the system coherence to the spatially changing signal component is vital.

A typical frequency of operation for the oscillator 2 is 2.45 GHz, but operation at any microwave frequency (between 2 GHz and 300 GHz is possible). The pulse repetition frequency of the oscillator is typically 1 kHz, but could be anything from 0.1 to 10 kHz, as required by the signal analysis loading. The duty cycle of the oscillator is typically 0.1, but it could be anything from 0.01 to 0.5, as required by analysis requirements. The pulse repetition frequency and the pulse width may be varied independently under the control of software for performing the analysis.

In the description above, each pulse from the antenna arrangement corresponds to a particular spatial view, but it would be possible for the beams to change to a different view within a pulse, for example, the four beams of Figure 9 could be selected in succession during each pulse.

Instead of patches 9, 10, the radiating elements could be slots. A suitable implementation for the hybrid couplers is Wilkinson couplers, but other types of hybrid coupler could be used if desired.

As an alternative to the patches 9, 10, 9a, 10a described, any of the antenna structures disclosed in our co-pending UK patent application no. 0700642.2 may be used, in particular an arrangement of three patches shown in Figure 15 of our co-pending patent application, comprising two patches on either side of a reflector patch, which two patches are alternately driven, for example, via PIN switches. In this case, the patches cannot be driven simultaneously to generate a central beam such as beam F in Figure 4, so the central beam is produced by summing at reduced gain the beams produced when the respective outer patches are driven. The same technique could be used to produce the central beam with the patches 9, 10 of Figure 3.

The intruder alarm described above is a vehicle intruder alarm, but the alarm could be used to detect intrusion into any space or region to be monitored. Thus, for example, the alarm could be attached to the outside of a railway carriage as an anti-vandal device. Equally, the alarm could be used to monitor a space in a building, or in the open air.

## Claims

1. An intruder alarm for monitoring a space, comprising a transmitter and an antenna arrangement for radiating a plurality of beams corresponding to different spatial views into the space, and a receiver which includes first and second signal processing channels for concurrently processing reflected energy received by the antenna arrangement corresponding to different radiated beams, the alarm being responsive to the outputs of both channels.

2. An intruder alarm as claimed in claim 1, wherein the antenna arrangement comprises two or more separate radiating elements.

3. An intruder alarm as claimed in claim 2, wherein the antenna arrangement includes means which is switchable to generate beams corresponding to the different spatial views.

4. An intruder alarm as claimed in any one of claims 1 to 3, including means to adjust the gain of the reflected energy corresponding to a spatial volume viewed by the antenna arrangement.

5. An intruder alarm as claimed in claim 4, wherein the transmitter is capable of transmitting pulses of variable width.

6. An intruder alarm as claimed in claim 4, wherein the transmitter is capable of transmitting pulses of variable pulse rate.

7. An intruder alarm as claimed in claim 4 or claim 5, wherein a processing channel is arranged to integrate a series of pulses of reflected energy above a given threshold, and the threshold is variable in order to vary the number pulses being integrated.

8. An intruder alarm as claimed in any one of claims 1 to 7, including means to compare the outputs of at least one of the first and second processing channels with reference signals corresponding to known threats.

9. An intruder alarm as claimed in claim 8, wherein the comparison means is arranged to compare the amplitudes of the outputs with the reference signals.

10. An intruder alarm as claimed in claim 8, wherein the comparison means is arranged to compare the time-varying behaviour of the outputs with the reference signals.

11. An intruder alarm as claimed in claim 10, wherein the comparison is done on the derivatives of the outputs.

12. An intruder alarm as claimed in any one of claims 1 to 11, wherein a balanced mixer is provided for mixing the received energy with a local oscillator, in order to reject interfering signals at the output of the mixer.

13. An intruder alarm as claimed in any one of claims 1 to 12, in which the antenna arrangement is arranged to radiate electromagnetic radiation.

14. An intruder alarm as claimed in claim 13, in which the frequency of electromagnetic radiation lies between 2 GHz and 300 GHz.

15. An intruder alarm as claimed in any one of claims 1 to 14, in which the intruder alarm is a vehicle alarm.

16. An intruder alarm as claimed in claim 15, in which the alarm is a vehicle intruder alarm.

17. A vehicle intruder alarm as claimed in claim 16, wherein the first and second signal processing channels are arranged to compare reflected energy corresponding to a view of the front or the rear of the vehicle with reflected energy corresponding to a view encompassing both the front and rear of the vehicle.

18. A vehicle intruder alarm as claimed in claim 17, wherein the first and second processing channels are arranged to compare reflected energy corresponding one spatial view at one gain with reflected energy corresponding to that spatial view at a different gain.

19. A method of detecting intrusion into a space to be monitored, comprising radiating a plurality of beams corresponding to different spatial volumes into the space from an antenna arrangement, receiving the reflected energy corresponding to different beams with the antenna arrangement and concurrently processing the reflected energy in first and second signal processing channels, and activating the alarm in response to the outputs of both channels.
